# EUROPEAN PATENT SPECIFICATION

(11) **EP 4 177 692 B1**
(45) Date of publication and mention of the grant of the patent: **14.05.2025**
(21) Application number: 21833502.4
(22) Date of filing: 17.06.2021
(51) Int. Cl.: G05B 23/02, G01M 99/00, H02P 29/024

(54) **MANAGEMENT DEVICE FOR POWER TRANSMISSION MECHANISM AND MANAGEMENT METHOD FOR POWER TRANSMISSION MECHANISM**
MANAGEMENT-GERÄT FÜR EINEN KRAFTÜBERTRAGUNGSMECHANISMUS UND MANAGEMENT-VERFAHREN FÜR EINEN KRAFTÜBERTRAGUNGSMECHANISMUS
DISPOSITIF DE GESTION POUR MÉCANISME DE TRANSMISSION DE PUISSANCE ET PROCÉDÉ DE GESTION POUR MÉCANISME DE TRANSMISSION DE PUISSANCE

(30) Priority: 01.07.2020 JP 2020114048
(43) Date of publication of application: 10.05.2023
(73) Proprietor: Hitachi Industrial Equipment Systems Co., Ltd., Tokyo 101-0021 (JP)
(72) Inventor: DEGUCHI, Kenta, Tokyo 100-8280 (JP); KANEKO, Satoru, Tokyo 100-8280 (JP); OHASHI, Hironori, Tokyo 101-0021 (JP); TAKADA, Hideto, Tokyo 101-0021 (JP); TAKANO, Yuuri, Tokyo 101-0021 (JP); MATSUMOTO, Yutaka, Tokyo 101-0021 (JP)
(74) Representative: MERH-IP Matias Erny Reichl Hoffmann Patentanwälte PartG mbB
(86) International application number: PCT/JP2021/023125
(87) International publication number: WO 2022/004417

(56) References cited:
- WO-A1-2019/017345
- WO-A1-2019/186909
- JP-A- H11 311 591
- US-A1- 2018 238 463

## Description

### TECHNICAL FIELD

The present invention relates to a management device for a power transmission mechanism and a management method for a power transmission mechanism.

### BACKGROUND ART

For example, various industrial machines such as an injection molding machine and a press device can be cited as any load-side device to which power from a power source is supplied via a power transmission mechanism. As an example of the injection molding machine, a machine is known that uses a rotating electric machine (motor) as a power source and that obtains any molded product by injecting a soft viscous material such as resin, metal fibers, or a mixed material thereof into a mold to which a predetermined shape is applied, via any power transmission mechanism.

The injection molding machine is cited as one example, and a configuration and operation thereof will be described. The injection molding machine obtains a desired molded product by transmitting power of an electric motor (rotational force or may also be horizontal power of a linear motor) as a drive source through a power transmission mechanism, as power for injecting a material into a mold for injection molding, and by injecting a soft viscous member into a predetermined shape. As a more specific example, a power conversion mechanism such as a ball screw that converts a rotational driving force of an electric motor into a linear motion is mechanically connected directly or indirectly to a mold, and an injection shaft integrated with a nut member screwed with linear power of the ball screw that is the power transmission mechanism presses a soft viscous member into a predetermined shape.

In the injection molding machine or the press device, managing an abnormality of an entirety of a load-side device with a drive source (the drive source itself, a work mechanism of the load-side device, or the like) is an important factor that greatly affects the quality of a final molded product. In addition, an abnormality causes overload of the machine or a component, and also causes an environmental issue such as energy efficiency and a business issue such as production stoppage caused by machine damage, and it can be said that managing an abnormality of the machine is an issue having a great impact on society.

As a technique related to the detection of an abnormality, Patent Document 1 discloses a technique for estimating a state of a machine. Specifically, a technique is disclosed in which an electric motor as a drive source and motor control means for controlling the electric motor are provided, and an abnormality of the machine is estimated by generating a motor control internal value of the motor control means and by comparing the motor control internal value with a threshold value. In this technique, degradation of the machine (load-side device and accompanying work components) can be detected by monitoring the motor control internal value.

Patent Document 2 discloses an abnormality diagnosis device for a power transmission mechanism that transmits power from an electric motor as a drive source, and an abnormality diagnosis method therefor. More specifically, in Patent Document 2, in a configuration in which power of the electric motor is connected to mechanical equipment via a pulley belt or via a gear chain, the pulley belt or the gear chain is diagnosed for abnormality by obtaining a current spectrum waveform from values transmitted from a current detector connected to the electric motor, and by counting the number of sideband waves outside a frequency band of the pulley belt or the gear chain that occur with a rotational speed, based on a spectral peak calculated by analysis of the current spectrum waveform.

In the injection molding machine or the press device, since the power transmission mechanism functions as an intermediary between a power source and an element such as a mold in which a load is directly generated, so that maintaining performance of the power transmission mechanism greatly affects the quality (level of completion) of a molded product that is a final deliverable, and maintaining the power transmission mechanism is important.
PTL 3 discloses an actuator which comprises an electric motor for moving an actuated part to an actuated position. The actuator further comprises a controller connected to the electric motor and configured to determine a motor current of the electric motor and to detect motor rotations.

### CITATION LIST

### PATENT DOCUMENT

Patent Document 1: WO 2018/220751 A1
Patent Document 2: WO 2018/109993 A1
Patent Document 3: US 2018/238463 A1

### SUMMARY OF THE INVENTION

### PROBLEMS TO BE SOLVED BY THE INVENTION

Here, detection of an abnormality (degradation) of the power transmission mechanism will be contemplated. In many cases, a load is non-uniformly applied to a load-side device, and in many cases, portions to which a large load is applied and portions to which a small load is applied are mixed in the power transmission mechanism. Namely, a ball screw, a pulley belt, a gear chain, or the like is cited as an example of the power transmission mechanism, and a deviation occurs between locations where degradation occurs, depending on a load situation of the load-side device.

In this regard, in the abnormality diagnosis technique for the power transmission mechanism disclosed in Patent Document 2, an abnormality of the power transmission mechanism is detected by monitoring the spectral peak from the current spectrum waveform or the accompanying sideband waves, but when degradation of the power transmission mechanism is small or is in an initial stage, the sensitivity of detection of the abnormality decreases, which leaves a problem. Namely, even when a current spectrum of the electric motor is simply analyzed for detection of degradation of the power transmission mechanism, in many cases, an abnormal value caused by degradation of the power and power mechanism appears merely as a very small fluctuation, it is difficult to distinguish whether the fluctuation is due to temporary current noise in a normal state or due to an abnormality, and merely monitoring a state of the current spectrum leaves a problem in the accuracy of detection of an abnormality.

A technique for detecting an abnormality of the power transmission mechanism with higher accuracy and probability is desired.

### SOLUTIONS TO PROBLEMS

The above cited problems are solved in accordance with the appended set of claims. Specifically, there is provided a management device for a power transmission mechanism according to the subject-matter of claim 1.

In addition, there is provided a management method for a power transmission mechanism according to the subject-matter of claim 9.

### EFFECTS OF THE INVENTION

According to the present invention, it is possible to detect an abnormality (degradation) of the power transmission mechanism with higher accuracy and probability. Particularly, according to the present invention, even when an abnormality (degradation) of the power transmission mechanism is small or in an initial stage, there is an effect of improving the accuracy and probability of being able to detect the abnormality.

Other objects, configurations, and effects of the present invention will be apparent from the following description.

### BRIEF DESCRIPTION OF THE DRAWINGS

Fig. 1 is a schematic diagram showing a mechanical configuration of an injection molding machine as an embodiment to which the present invention is applied.
Fig. 2 is a schematic diagram showing a functional configuration of the injection molding machine in the embodiment.
Fig. 3 is a schematic diagram showing a functional configuration of a motor controller and of a state estimator in the embodiment.
Fig. 4 is a schematic diagram showing a functional configuration of a control internal value generator in the embodiment.
Fig. 5 is a schematic diagram showing a functional configuration of a state calculator in the embodiment.
Fig. 6(a) is a schematic diagram showing an operation of and a mode of a degradation location of a ball screw mechanism.
Fig. 6(b) is a schematic graph showing a change in torque current until the ball screw mechanism reaches an end position from a start position.
Fig. 7(a) is a schematic graph showing a normal value and an abnormal value of a torque current value when a degradation determination process in the embodiment is executed.
Fig. 7(b) is a schematic graph showing a calculation result of average values of normal values and abnormal values of each divided section when the degradation determination process in the embodiment is executed.
Fig. 8(a) is a graph showing distributions of average values of normal values and of abnormal values in each cycle when the degradation determination process according to the embodiment is not executed.
Fig. 8(b) is a graph showing distributions of average values of normal values and of abnormal values in each cycle when the degradation determination process according to the embodiment is executed.
Fig. 9(a) is a graph showing a relationship between torque current and a component when a section for which a feature quantity is calculated is changed.
Fig. 9(b) is a graph schematically showing a feature quantity (average values) of torque current in each section when a section for which the feature quantity is calculated is changed.

### MODE FOR CARRYING OUT THE INVENTION

Hereinbelow, an embodiment of the present invention will be described with reference to the drawings.

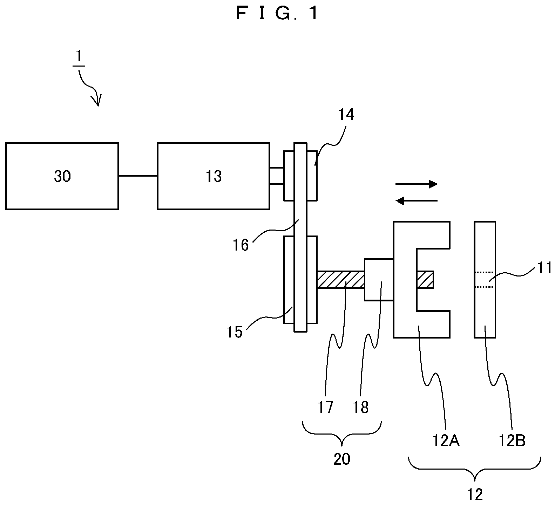

Fig. 1 schematically shows a partial schematic configuration of an injection molding machine 1 including a management device (controller 30) for a power transmission mechanism to which the present invention is applied. Incidentally, in the present embodiment, the injection molding machine will be described as an example, but the present invention is not limited thereto, and is applicable to a device such as a press device or a cutting device as long as a driving force of a drive source is transmitted to the load side via a power transmission mechanism.

First, a mechanical configuration and operation of the injection molding machine 1 will be described. The injection molding machine 1 converts rotation of a plurality of motors into a linear motion to drive a single linear movement member, and at this time, synchronously operates the plurality of motors such that advance positions are aligned. Incidentally, a configuration to which the present invention is applicable may be a configuration in which a single motor supplies a driving force to a plurality of power transmission mechanisms via gears or a configuration in which a single motor supplies a driving force to a single power transmission mechanism.

The injection molding machine 1 can pour molten resin from a hole 11 provided in a fixed mold 12B of a mold 12, and manufacture a resin molded product according to a shape of a gap existing between a movable mold 12A and the fixed mold 12B.

The mold includes the fixed mold 12B fixed to a housing, and the movable mold 12A that moves forward and backward. The injection molding machine 1 includes a motor 13; a drive pulley 14 firmly fixed to an output shaft of the motor 13; a driven pulley 15; a timing belt 16 that transmits rotation of the drive pulley 14 to the driven pulley 15; a ball screw mechanism 20 as a power transmission mechanism that converts rotation of the driven pulley 15 into a linear motion and that transmits the linear motion to the movable mold 12A; and the controller 30.

The motor 13 includes an encoder (not shown) that outputs a motor position signal S2 indicating an advance position (corresponding to an advance position of the ball screw mechanism 20) of the motor 13. In the injection molding machine 1, the controller 30 receives an original speed command signal S0 from a host device (not shown), and controls driving of the motor 13.

When the motor 13 is driven, rotation of the motor 13 is transmitted to a screw shaft 17 of the ball screw mechanism 20 via the drive pulley 14, via the timing belt 16, and via the driven pulley 15, and a nut unit 18 screwed into a groove of the screw shaft 17 via a ball converts a rotational force into a linear motion. The movable mold 12A is integrated with or mechanically coupled to the nut unit 18, and the movable mold 12A also moves linearly according to the linear motion of the nut unit 18. As a result, the movable mold 12A moves toward or away from the fixed mold 12B. After the movable mold 12A is brought into contact with the fixed mold 12B, resin is poured and molded, a molded product is cooled and solidified, and then the movable mold 12A is separated from the fixed mold 12B to extract the molded product.

The controller 30 is configured to include, for example, a microcomputer for embedded machine including a CPU, a ROM, a RAM, an EEPROM, various I/O interfaces, and the like, and executes various functions in cooperation with a program. The controller 30 executes control of the injection molding machine 1, and controls, for example, all molding steps such as a plasticizing operation, an injection operation, a mold opening and closing operation, and an ejecting operation. Incidentally, the present invention is not limited to the present embodiment, and a part thereof may be formed of an analog circuit.

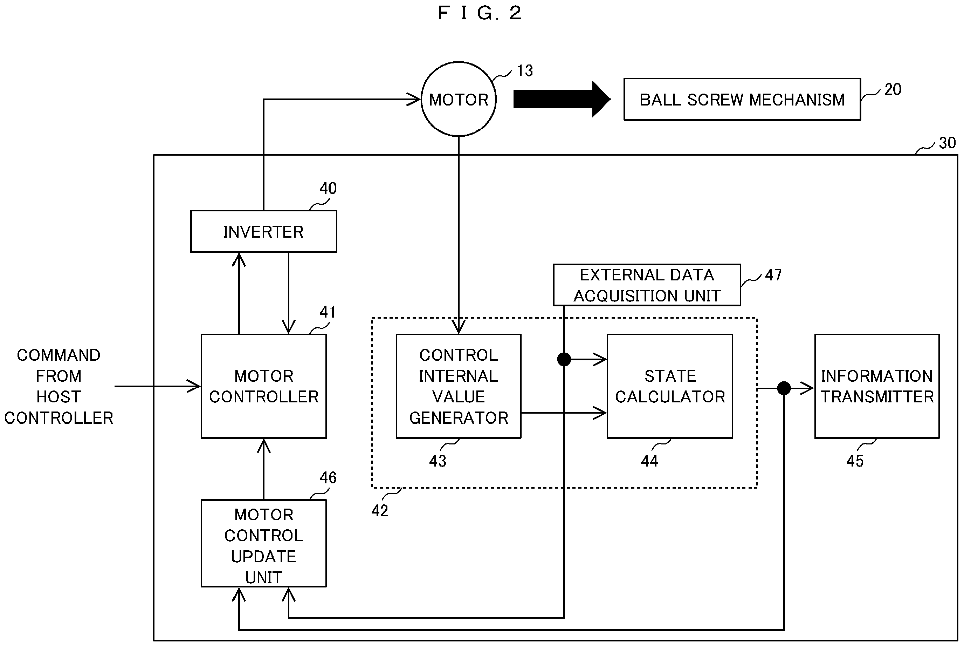

Next, the controller 30 as a functional configuration will be described. Fig. 2 schematically shows a functional block diagram of the controller 30.

An inverter 40 is controlled by a motor controller 41 to which a so-called vector control method is applied. The motor controller 41 acquires information such as motor current, motor voltage, position information of a rotor, and the number of rotations from the inverter 40 or from the motor 13, and generates a voltage command value for driving the motor 13 based on the information according to a command from a host controller. Then, the motor controller 41 provides the generated voltage command value to the inverter 40.

An external data acquisition unit 47 is formed of sensors and the like installed other than the motor 13 or the inverter 40, and acquires a temperature of the machine, an ambient temperature, a host command value of the machine, or the like.

A state estimator 42 includes a control internal value generator 43 that generates motor control internal values, and a state calculator 44 that calculates a feature quantity or a state quantity related to the injection molding machine 1 based on the motor control internal values generated by the control internal value generator 43.

The control internal value generator 43 generates motor control internal values that are state variables in the motor controller 41 and that are related to a state of the injection molding machine 1, based on time-series data acquired by a current sensor, a voltage sensor, and a position sensor that are independently installed in an input unit or in an output unit of the motor 13, separately from sensors for the motor controller 41, and on data acquired by the external data acquisition unit 47.

The state calculator 44 has a state estimation model, and calculates a state quantity indicating a state of a machine system, namely, a state of the machine itself or a state (quality or the like) of a product manufactured by the machine, using the state estimation model based on the motor control internal values generated by motor control internal value generation means. Namely, the state estimator 42 inputs data acquired by each sensor or by the external data acquisition unit 47 described above, generates motor control internal values to be generated from the input data, and outputs a state quantity calculated based on the generated motor control internal values or on information regarding a state of the injection molding machine 1 indicating the state quantity (hereinbelow, referred to as an "estimated state"). The estimated state output from the state estimator 42 is transmitted to an information transmitter 45 and to a motor control update unit 46 to be described later.

The information transmitter 45 notifies a worker using the machine system or a manager of the machine system of information regarding a state of the injection molding machine 1, for example, a feature quantity of the machine itself (determination of degradation of the screw shaft 17 to be described later or the like) or information regarding the quality of a product or on a change in quality according to the estimated state output from the state estimator 42, by means of a display, sound, lamp, vibration, or the like. Accordingly, it is possible to reduce work load in identifying a maintenance timing of the machine, in identifying a situation when quality changes, or the like.

The motor control update unit 46 changes the motor controller 41, namely, a control command, a control parameter, or control software based on the estimated state output from the state estimator 42. For example, when the quality of a product has changed, the motor control update unit 46 changes the motor controller 41 to suppress the change in quality. Accordingly, since adjustment work of the injection molding machine 1 can be automated, work load is reduced.

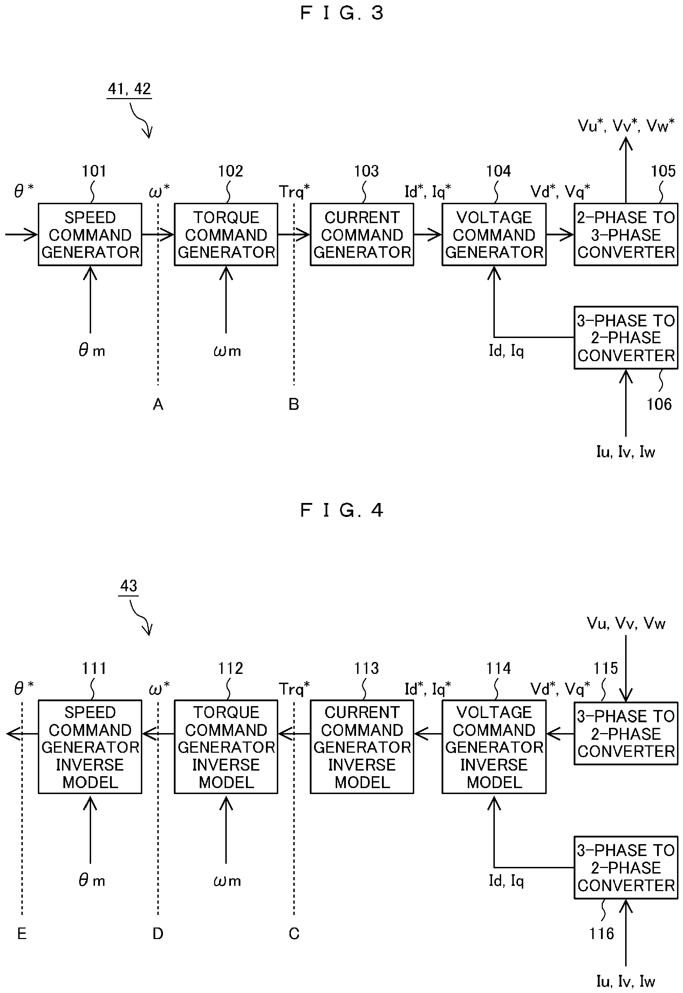

Next, the motor controller 41 and the state estimator 42 will be described in further detail. Fig. 3 is a block diagram schematically showing a functional configuration of the motor controller 41.

In Fig. 3, a command from the host controller is a position command θ*, but may be a speed (the number of rotations) command ω* or a torque command Trq*. Incidentally, block diagrams of the motor controller 41 when commands from the host controller are the speed (the number of rotations) ω* and the torque command Trq* are a block diagram on the right side of a boundary line A and a block diagram on the right side of a boundary line B in Fig. 3, respectively.

As shown in Fig. 3, when the position command θ* is input to the motor controller 41 from the host controller, a speed command generator 101 generates and outputs the speed command ω* based on a difference between a position feedback value θₘ actually measured by the sensor and the position command value θ*.

When the speed command ω* is input, a torque command generator 102 generates and outputs the torque command Trq* based on a difference between a speed (the number of rotations) feedback value ωₘ actually measured by the sensor and the speed command ω*.

When the torque command Trq* is input, a current command generator 103 generates and outputs current commands on d- and q-axes in a rotating coordinate system, namely, a d-axis current command Id* and a q-axis current command Iq* based on the torque command Trq*.

When the d-axis current command Id* and the q-axis current command Iq* are input, a voltage command generator 104 generates and outputs voltage commands on the d- and q-axes, namely a d-axis voltage command Vd* and a q-axis voltage command Vq* based on a difference between a d-axis current feedback value Id and the d-axis current command Id* and on a difference between a q-axis current feedback value Iq and the q-axis current command Iq*.

Here, a 3-phase to 2-phase converter 106 converts a U-phase current feedback value Iu, a V-phase current feedback value Iv, and a W-phase current feedback value Iw of the motor actually measured by the sensor, from 3-phase to 2-phase to obtain the d-axis current feedback value Id and the q-axis current feedback value Iq.

When the d-axis voltage command Vd* and the q-axis voltage command Vq* are input, a 2-phase to 3-phase converter 105 converts the d-axis voltage command Vd* and the q-axis voltage command Vq* into a U-phase voltage command Vu*, a V-phase voltage command Vv*, and a W-phase voltage command Vw*, and outputs the voltage commands to the inverter 40.

Next, the state estimator 42 will be described.

As described above (refer to Fig. 2), the state estimator 42 includes the control internal value generator 43 and the state calculator 44. Hereinbelow, each will be described with reference to the drawings.

Fig. 4 schematically shows a functional configuration of the control internal value generator 43. As shown in Fig. 4, the control internal value generator 43 is, so to speak, an inverse model of the motor controller 41 shown in Fig. 3. Namely, the control internal value generator 43 includes a speed command generator inverse model 111, a torque command generator inverse model 112, a current command generator inverse model 113, a voltage command generator inverse model 114, a 3-phase to 2-phase converter 115, and a 3-phase to 2-phase converter 116 corresponding to the speed command generator 101, the torque command generator 102, the current command generator 103, the voltage command generator 104, the 2-phase to 3-phase converter 105, and the 3-phase to 2-phase converter 106 in the motor controller 41 (refer to Fig. 3), respectively.

In Fig. 4, a command from the host controller to the motor controller 41 is the position command θ*, but may be the torque command Trq* or the speed command ω*. Incidentally, block diagrams of the motor control internal value generation means 6 when commands from the host controller are the torque command Trq*, the speed command ω*, and the position command θ* are a block diagram on the right side of a boundary line C, a block diagram on the right side of a boundary line D, and a block diagram on the right side of a boundary line E in Fig. 4, respectively.

With the configuration shown in Fig. 4, the control internal value generator 43 calculates the following control internal value based on any one or a plurality of the 3-phase voltage feedback values Vu, Vv, and Vw of the motor, the 3-phase current feedback values Iu, Iv, and Iw of the motor, the speed feedback value ωm, and the position feedback value θm that are time-series data acquired by the current sensor, the voltage sensor, and the position sensor that are independently installed in the input unit or in the output unit of the motor 13, separately from the sensors for the motor controller 41. Such control internal values are the d-axis current feedback value Id and the q-axis current feedback value Iq, the d-axis voltage command Vd* and the q-axis voltage command Vq*, the d-axis current command Id* and the q-axis current command Iq*, the torque command Trq*, the speed command ω*, and the position command θ*.

Incidentally, in the present embodiment, θ*, θm, ω*, ωm, Trq*, Id*, Iq*, Id, Iq, Vd*, Vq*, Vu*, Vv*, Vw*, Vu, Vv, Vw, Iu, Iv, and Iw, differences between command values and actual measured values, and output values of a comparator, an integrator, and a differentiator forming the controller, which are state variables of the motor controller 41, are the motor control internal values. Namely, any one or a plurality of these motor control internal values in the motor controller 41 are generated by the control internal value generator 43.

Incidentally, in the present embodiment, the control internal value generator 43 shown in Fig. 4 can also generate state variables that are generated and used in the course of processing by the motor controller 41 and that are not output from the motor controller 41 (for example, Id*, Iq*, Id, Iq, Vd*, and Vq*), among the state variables of the motor controller 41. Accordingly, the present embodiment is applicable to estimate various states of a wide variety of the injection molding machines 1.

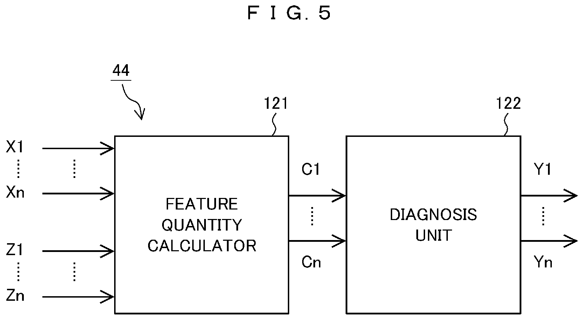

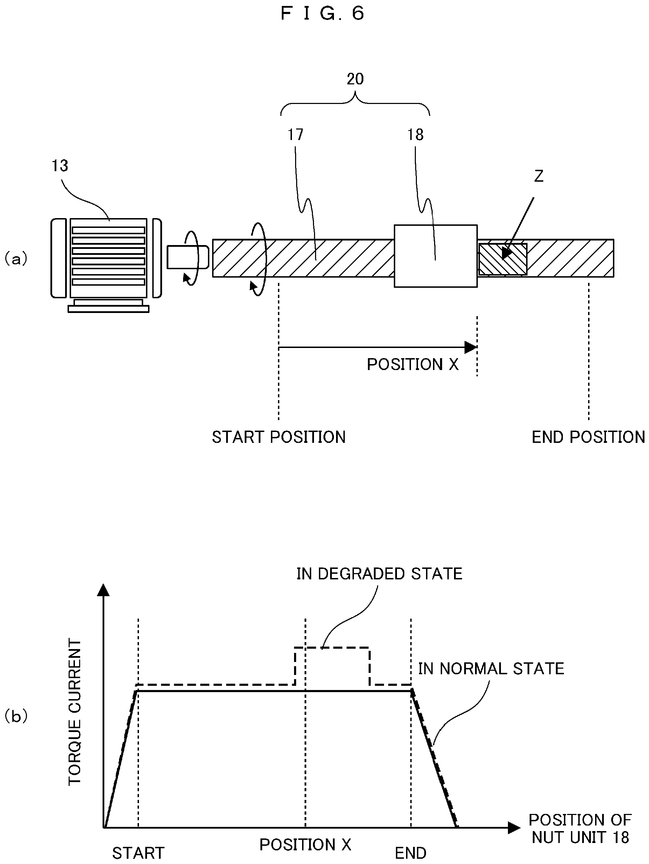

Fig. 5 is a block diagram schematically showing a functional configuration of the state calculator 44. As described above, the state calculator 44 (refer to Fig. 2) calculates a state quantity indicating a state of the injection molding machine 1, namely, a state of the machine itself or a state (quality or the like) of a product manufactured by the machine, based on at least one of the motor control internal values generated by the control internal value generator 43. Incidentally, the state calculator 44 may calculate a state quantity based on the data (temperature and the like of the machine) acquired by the external data acquisition unit 47 (refer to Fig. 2), in addition to the motor control internal values. Therefore, in Figs. 5 and 6, motor control internal values (X1 to Xn) and data (Z1 to Zn) acquired by the external data acquisition unit 47 are input to the state calculator 44.

X1 to Xn in Fig. 5 indicate motor control internal values, and Z1 to Zn indicate information acquired by the external data acquisition unit 47. At least one of the motor control internal values is input to the state calculator 44. In addition, whether or not to input the information acquired by the external data acquisition unit 47, to the state calculator 44 and the number of the motor control internal values input thereto are arbitrary.

The types or the numbers of the motor control internal values and of the information acquired by the external data acquisition unit 47 which are to be input to the state calculator 44 are set according to a configuration (for example, a statistical model to be described later) of the state calculator 44.

Incidentally, subscripts of Xn, Zn, and Cn (to be described later) in Fig. 5 are the same "n" for convenience, but the "n" indicates that the number of each of Xn, Zn, and Cn is arbitrary, and does not mean that the numbers of Xn, of Zn, and of Cn are the same.

In the configuration example of Fig. 5, the state calculator 44 includes a feature quantity calculator 121 that calculates feature quantities used for diagnosis based on the motor control internal values X1 to Xn and on the external data Z1 to Zn, and a diagnosis unit 122 that diagnoses a degraded state of the machine or a state such as the quality of a product based on feature quantities C1 to Cn. The diagnosis unit 122 diagnoses the state using a statistical model or a machine learning model. The feature quantity calculator 121 outputs instantaneous data of Xn or Zn as the feature quantity Cn as it is without processing the instantaneous data, or performs frequency analysis (amplitude, phase, or the like) of instantaneous data of Xn or Zn in a predetermined time interval and as a result, outputs an effective value, an average value, a standard deviation, a maximum value, or a minimum value in the predetermined time interval or an overshoot amount or a peak value in the predetermined time interval. The number of the feature quantities Cn may be a single-digit number or a multi-digit number.

In addition, the feature quantity calculator 121 may output predetermined quantities calculated from the motor control internal values, for example, active power, reactive power, and the like as feature quantities. In addition, disturbance torque and the like estimated by a so-called observer may be feature quantities. Incidentally, these feature quantities may be output after being further subjected to frequency analysis, statistical calculation (averaging), or the like.

The diagnosis unit 122 receives the feature quantities C1 to Cn output from the feature quantity calculator 121, and calculates state quantity estimated values Y1 to Yn based on the feature quantities C1 to Cn.

Here, calculation of feature quantities and a machine abnormality determination method related to the power transmission mechanism (particularly, the screw shaft 17 of the ball screw mechanism 20) by the injection molding machine 1 that is one feature of the present embodiment will be described.

Fig. 6(a) schematically shows an operation of and a mode of a degradation location of the ball screw mechanism 20 of the injection molding machine 1. The use of the ball screw mechanism 20 over a long period of time wears the groove and the like of the screw shaft 17. At this time, the groove of the screw shaft 17 may degrade uniformly, but in many cases, degrades gradually from a specific location due to uneven usage frequency. For example, the case of Fig. 6(a) shows a mode where degradation Z has occurred in a portion at which the nut unit 18 as a component is close to a rear half from a middle point of the screw shaft 17. Since the degradation causes instability in a mold opening and closing operation, it is desirable that the degradation is detected in an early stage with high accuracy.

Fig. 6(b) schematically shows a mode where torque current (q-axis current) changes until the ball screw mechanism 20 reaches an end position from a start position. First, when the nut unit 18 is moved from the start position in an injection direction by rotation of the screw shaft 17, the torque current rises according to injection stress. Then, thereafter, the torque current rises in a protruding shape (dotted line) in a stage where the nut unit 18 has reached a position X. The reason is that more friction than normal is generated due to the degradation location Z of the screw shaft 17, and motor torque for driving the ball screw mechanism 20 increases by that amount.

In such a manner, the feature quantity calculator 121 can detect degradation of the screw shaft 17 by monitoring a change in torque current value from the start position to the end position.

However, for example, when degradation is in an initial stage or when there are fluctuations such as noise in the torque current value, usually, it is remarkably difficult to determine a change in torque current, which is a problem. Namely, the reason is that a difference between a normal torque current value and abnormal torque current value is very small.

Therefore, in the present embodiment, the ball screw mechanism 20 divides a process from a start point to an end point into a predetermined of a plurality of regions, and calculates an average value of torque current values (q-axis current feedback values Iq) in each region. A difference value between an average value of torque current in a normal state defined in advance and an average value of torque current when diagnosis is performed is calculated for each region. Thereafter, a maximum value of the calculated difference values of the regions is extracted as a feature quantity. The feature quantity and a threshold value determined in advance are compared with each other to determine the presence or absence of degradation of or the degree of degradation of the screw shaft 17.

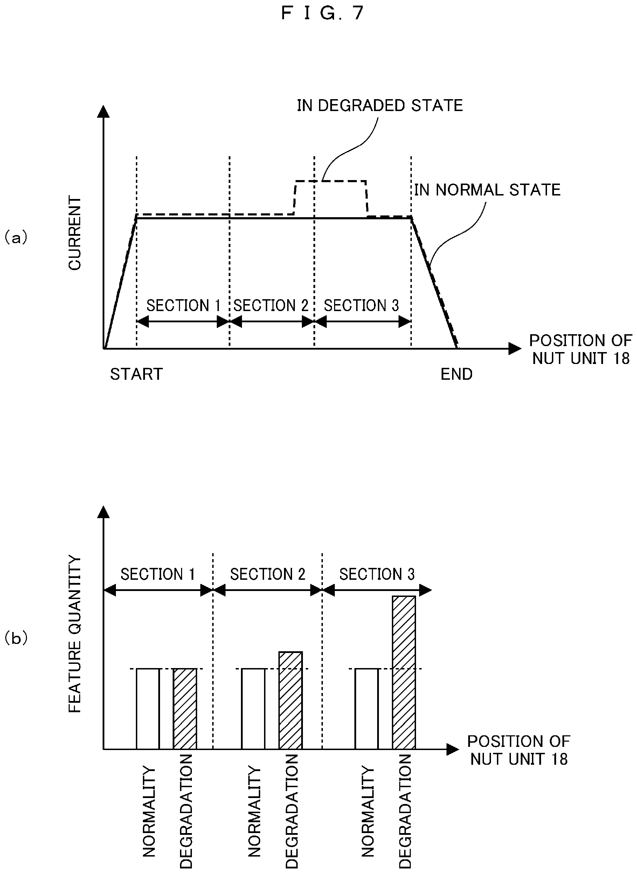

Figs. 7(a) and 7(b) schematically show a mode of degradation determination of the present embodiment based on region division and on a feature quantity. Fig. 7(a) is a graph showing a relationship between torque current and the position of the nut unit 18. As shown in Fig. 7(a), a section of one injection process from a start point to an end point is divided into a plurality of arbitrary regions. For example, in the case of the injection molding machine 1 as in the present embodiment, a location where the nut unit 18 is located on the screw shaft 17 can be detected from the number of rotations of the motor 13. For example, when the number of rotations of the motor in one process is 30 rotations, an interval of every 10 rotations is divided into three sections 1 to 3. Incidentally, the division method is not limited to equal division and may be unequal division. For example, when a degraded portion is predicted to some extent in advance based on empirical rule, experiments, or the like, region division may be performed such that a section in which the degradation is expected to occur is larger (smaller) than other sections.

The feature quantity calculator 121 measures torque current values equal to or less than the threshold value (normal values) and the number of the torque current values among torque current values detected at predetermined time intervals in each section, and calculates an average of the measured torque current values. Similarly, the feature quantity calculator 121 measures torque current values larger than the threshold value (abnormal values) and the number of the torque current values among the torque current values detected at the predetermined time intervals in each section, and calculates an average value of the measured torque current values. Thereafter, the feature quantity calculator 121 calculates a difference value between the average value of the normal torque current values and the average value of the abnormal torque current values for each region, and extracts a maximum value of the difference values of the regions as a feature quantity. The result is output to the diagnosis unit 122 of the state estimator 42.

Fig. 7(b) schematically shows a feature quantity (average value) of torque current in each section and the position of the nut unit. In the same drawing, it can be seen that the average value of the abnormal values (degradation values) is larger than the average value of the normal values in the section 3, and the difference value between the average values in the section 3 is at its maximum in comparison with that in the other section 1 or section 2. The diagnosis unit 122 of the state estimator 42 compares the feature quantity in the section 3 with the threshold value for degradation, and determines that the screw shaft 17 degrades. Then, the diagnosis unit 122 outputs a state quantity estimated value of degradation such as the average value of the abnormal values of torque current in the section 3, and a state quantity estimated value of a degradation position (section 3) to the motor control update unit 46 and to the information transmitter 45.

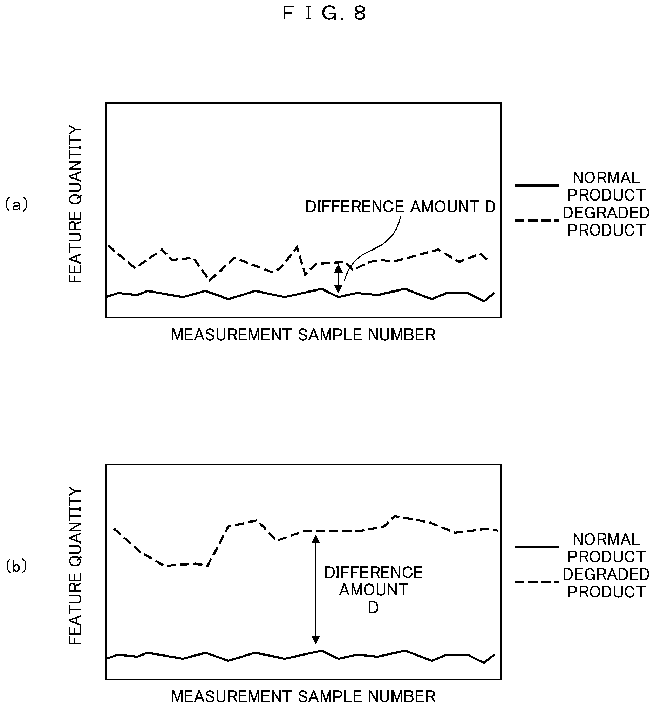

Figs. 8(a) and 8(b) schematically show one example of result comparison between when degradation determination is executed based on a feature quantity of torque current and when degradation determination is not executed. In the same drawings, the horizontal axis indicates measurement sample number, and the vertical axis indicates a feature quantity (difference value between average values of torque current) in each sample.

Fig. 8(a) shows an example in which torque current values are simply compared with each other without performing the above-described degradation determination process. Namely, average values of torque current in a normal state (in this verification, average values of torque current of N samples of normal data) and a difference value between the average values of torque current of the samples and average values of torque current when an abnormality is detected are calculated as feature quantities, and are shown for each cycle. As shown in the same drawing, a difference value D between the average values of the normal values and of the abnormal values may be very small.

On the other hand, as shown in Fig. 8(b), when the degradation determination process is executed, it can be seen that the difference value D between a normal torque current value group and an abnormal torque current value group increases, and a difference between normality and degradation is widened (namely, the sensitivity of detection of degradation increases). Namely, in the degradation determination, since one process is first divided into a plurality of regions, and averages of normal values and of abnormal values in each divided section are calculated, the number of samples for calculating the average values is small, and the degree of influence of prominent values on the average values is higher than when average values are calculated without performing the degradation determination process (method of Fig. 8(a)).

Then, since an abnormal average value in a section where an average value of abnormal values is higher among the divided regions that are likely to be affected by such prominent values is treated as an abnormal value of the one cycle (process), a difference between an average value of torque current values that are the most abnormal and a normal average value appears as a relatively large current value difference. Namely, it is possible to obtain remarkable effects such as being able to clearly determine whether a torque current value is normal or abnormal, even when an amplitude of the torque current value is very small, and also being able to improve the accuracy of detection of degradation or being able to detect degradation in an early stage.

As described above, according to the present embodiment, since one process is divided into a plurality of sections, average values of normal values and of abnormal values in each section are calculated, and the highest value of the average of abnormal values is used to determine degradation, it is possible to detect degradation of the power transmission mechanism with higher accuracy and probability. Particularly, according to the present invention, even when degradation of the power transmission mechanism is small or in an initial stage, an effect of improving the accuracy and probability of being able to detect an abnormality can be expected.

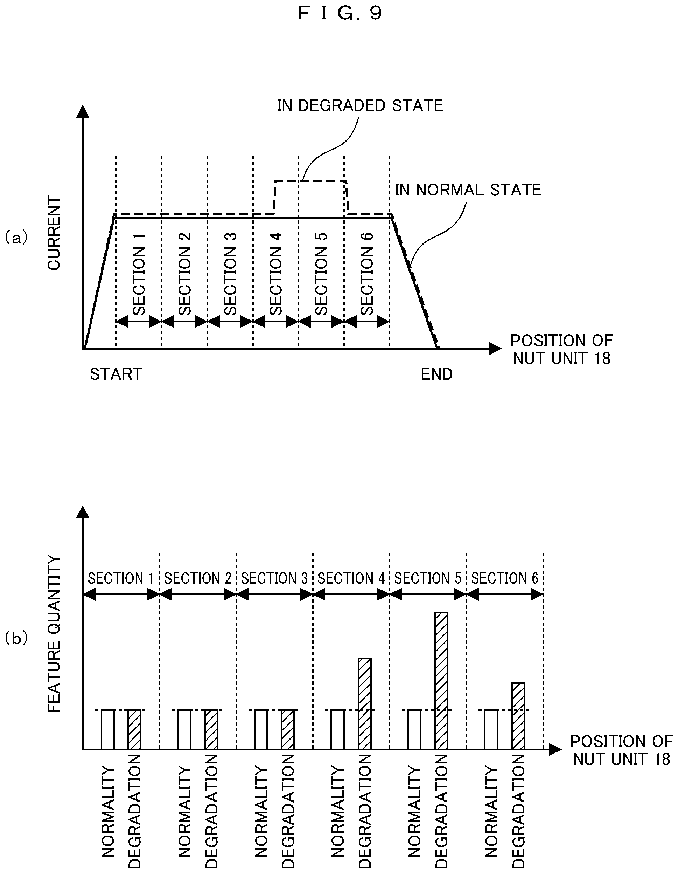

In addition, Fig. 9(a) is a graph showing a relationship between torque current and the position of the nut unit 18 when a section for which the feature quantity is calculated is changed. Fig. 9(b) is a graph schematically showing a feature quantity (average values) of torque current in each section and the position of the nut unit 18 when a section for which the feature quantity is calculated is changed.

As shown in Fig. 9(a), the sensitivity of detection of an abnormality can also be improved by changing the section for which a feature quantity is calculated. Since a difference value in torque current between a normal state and a degraded state is increased by subdividing the section for which a feature quantity is calculated (a time width of one section or a movement amount of one section), diagnostic sensitivity is improved.

Conversely, when the section for which a feature quantity is calculated is widened, a difference value in torque current between a normal state and a degraded state decreases, but the feature quantity is unlikely to be affected by an external amount such as measurement noise, and a diagnosis result is stabilized. The accuracy of detection or the sensitivity of detection can be adjusted according to a degraded state of an object to be diagnosed or driving conditions of the object to be diagnosed (a movement speed, a movement amount, or the like of a component) by applying the method described above.

Incidentally, it goes without saying that the present invention is not limited to various configurations or functions described above, and various modifications or replacements can be made without departing from the concept of the present invention. For example, in the embodiment, the injection molding machine 1 has been provided as an application example, but as already described, the present invention is applicable to a load-side machine such as a press device or a cutting device to which power of the motor that is a drive source is transmitted via the power transmission mechanism.

In addition, in the embodiment, degradation of the screw shaft 17 of the ball screw mechanism 20 as a power transmission mechanism is determined based on a feature quantity, but the present invention may be applied to determine degradation of the timing belt 16 as a power transmission mechanism, or of a chain instead of the timing belt 16.

In addition, in the embodiment, the ball screw mechanism 20 has been applied as a power transmission mechanism, but the present invention is applicable to a screw mechanism formed of a screw bolt and a nut without a ball.

### REFERENCE SIGNS LIST

- 1: Injection molding machine
- 12: Mold
- 13: Motor
- 14: Drive pulley
- 15: Driven pulley
- 16: Timing belt
- 17: Screw shaft
- 18: Nut unit
- 20: Ball screw mechanism
- 30: Controller (management device)
- 40: Inverter
- 41: motor controller
- 42: State estimator
- 43: Control internal value generator
- 44: State calculator
- 45: Information transmitter
- 46: Motor control update unit
- 47: External data acquisition unit
- 101: Speed command generator
- 102: Torque command generator
- 103: Current command generator
- 104: Voltage command generator
- 105: 2-phase to 3-phase converter
- 106: 3-phase to 2-phase converter
- 111: Speed command generator inverse model
- 112: Torque command generator inverse model
- 113: Current command generator inverse model
- 114: Voltage command generator inverse model
- 115: 3-phase to 2-phase converter
- 115: 3-phase to 2-phase converter
- 121: Feature quantity calculator
- 122: Diagnosis unit

## Claims

1. A management device for a power transmission mechanism that transmits a driving force from an electric motor (13) to a load-side device,
wherein the management device (30) is configured to acquire torque current values of the electric motor (13) for a unit process driven by the power transmission mechanism, is further configured to divide the unit process from a start point to an end point into a predetermined plurality of sections and is further configured to classify the torque current values acquired for each section into torque current values equal to or less than a reference value as normal values and into torque current values larger than the reference value as abnormal values,
the management device **characterized in that** it is further configured to obtain an average value of each of the torque current values which are equal to or less than the reference value and an average value of the torque current values which are larger than the reference value for each section, and to detect an abnormality of the power transmission mechanism based on a calculation of a difference value between the average value of the normal and the average value of the abnormal values for each section and to extract a maximum value of the difference values of said sections.

2. The management device for the power transmission mechanism according to claim 1,
wherein the management device (30) equally divides the unit process into a plurality of sections.

3. The management device for the power transmission mechanism according to claim 1,
wherein the management device (30) unequally divides the unit process into a plurality of sections.

4. The management device for the power transmission mechanism according to claim 1,
wherein the management device (30) notifies an outside of the detected abnormality of the power transmission mechanism.

5. The management device for the power transmission mechanism according to claim 1,
wherein the power transmission mechanism converts the driving force of the electric motor (13) into a linear motion, and transmits the linear motion to the load-side device.

6. The management device for the power transmission mechanism according to claim 1,
wherein the power transmission mechanism includes a screw and a bolt screwed with the screw.

7. The management device for the power transmission mechanism according to claim 1,
wherein the power transmission mechanism is a ball screw mechanism (20).

8. The management device for the power transmission mechanism according to claim 1,
wherein the load-side device is any one of an injection molding machine (1), a press device, and a cutting device.

9. A management method for a power transmission mechanism that transmits a driving force from an electric motor (13) to a load-side device, the management method comprising:
a process of dividing a unit process from a start point to end point driven by the power transmission mechanism, into a predetermined plurality of sections;
a process of acquiring torque current values of the electric motor (13) for each of the plurality of sections driven by the power transmission mechanism;
the management method is **characterized by**
a process of obtaining an average value of torque current values which are equal to or less than a reference value and which are classified as normal values and an average value of torque current values which are larger than the reference value and which are classified as abnormal values for the torque current values acquired for each of the plurality of sections; and
a process of detecting an abnormality of the power transmission mechanism based on a calculation of a difference value between the average value of the normal values and the average value of the abnormal values for each section and extracting a maximum value of the difference values for each of said sections.

10. The management method for the power transmission mechanism according to claim 9, further comprising:
a process of equally dividing the unit process into a plurality of sections.

11. The management method for the power transmission mechanism according to claim 9, further comprising:
a process of unequally dividing the unit process into a plurality of sections.

12. The management method for the power transmission mechanism according to claim 9, further comprising:
a process of notifying an outside of the detected abnormality of the power transmission mechanism.

## Patentansprüche

1. Managementvorrichtung für einen Kraftübertragungsmechanismus, der eine Antriebskraft von einem Elektromotor (13) zu einer lastseitigen Vorrichtung überträgt,
wobei die Managementvorrichtung (30) konfiguriert ist, Drehmomentstromwerte des Elektromotors (13) für einen Einheitsprozess, der durch den Kraftübertragungsmechanismus angesteuert wird, zu erfassen, ferner konfiguriert ist, den Einheitsprozess von einem Startpunkt zu einem Endpunkt in mehrere vorgegebene Abschnitte zu unterteilen, und ferner konfiguriert ist, die Drehmomentstromwerte, die für jeden Abschnitt erfasst wurden und gleich oder kleiner als ein Bezugswert sind, in Drehmomentstromwerte mit normalem Wert und Drehmomentstromwerte, die für jeden Abschnitt erfasst wurden und größer als der Bezugswert sind, in Drehmomentstromwerte mit anomalem Wert einzustufen, und
die Managementvorrichtung **dadurch gekennzeichnet ist, dass** sie ferner konfiguriert ist, einen Durchschnittswert jedes der Drehmomentstromwerte, die gleich oder kleiner als der Bezugswert sind, und einen Durchschnittswert der Drehmomentstromwerte, die größer als der Bezugswert sind, für jeden Abschnitt zu erhalten und eine Anomalie des Kraftübertragungsmechanismus auf der Grundlage einer Berechnung eines Differenzwerts zwischen dem Durchschnittswert der normalen Werte und dem Durchschnittswert der anomalen Werte für jeden Abschnitt zu detektieren und einen Höchstwert der Differenzwerte der Abschnitte zu extrahieren.

2. Managementvorrichtung für den Kraftübertragungsmechanismus nach Anspruch 1,
wobei die Managementvorrichtung (30) den Einheitsprozess gleichmäßig in mehrere Abschnitte unterteilt.

3. Managementvorrichtung für den Kraftübertragungsmechanismus nach Anspruch 1,
wobei die Managementvorrichtung (30) den Einheitsprozess ungleichmäßig in mehrere Abschnitte unterteilt.

4. Managementvorrichtung für den Kraftübertragungsmechanismus nach Anspruch 1,
wobei die Managementvorrichtung (30) eine Außenseite über die detektierte Anomalie des Kraftübertragungsmechanismus informiert.

5. Managementvorrichtung für den Kraftübertragungsmechanismus nach Anspruch 1,
wobei der Kraftübertragungsmechanismus die Antriebskraft des Elektromotors (13) in eine geradlinige Bewegung umwandelt und die geradlinige Bewegung zur lastseitigen Vorrichtung überträgt.

6. Managementvorrichtung für den Kraftübertragungsmechanismus nach Anspruch 1,
wobei der Kraftübertragungsmechanismus eine Schraube und einen Bolzen, der mit der Schraube verschraubt ist, enthält.

7. Managementvorrichtung für den Kraftübertragungsmechanismus nach Anspruch 1,
wobei der Kraftübertragungsmechanismus ein Kugelumlaufspindelmechanismus (20) ist.

8. Managementvorrichtung für den Kraftübertragungsmechanismus nach Anspruch 1,
wobei die lastseitige Vorrichtung eine einer Spritzgussmaschine (1), einer Pressevorrichtung und einer Schneidvorrichtung ist.

9. Managementverfahren für einen Kraftübertragungsmechanismus, der eine Antriebskraft von einem Elektromotor (13) zu einer lastseitigen Vorrichtung überträgt, wobei das Managementverfahren Folgendes umfasst:
einen Prozess des Unterteilens eines Einheitsprozesses, der durch den Kraftübertragungsmechanismus angesteuert wird, von einem Startpunkt zu einem Endpunkt in mehrere vorgegebene Abschnitte, und
einen Prozess des Erfassens von Drehmomentstromwerten des Elektromotors (13) für jeden der mehreren Abschnitte, die durch den Kraftübertragungsmechanismus angesteuert werden; wobei
das Managementverfahren **gekennzeichnet ist durch**
einen Prozess des Erhaltens eines Durchschnittswerts von Drehmomentstromwerten, die gleich oder kleiner als ein Bezugswert sind und die als normale Werte eingestuft sind, und eines Durchschnittswerts von Drehmomentstromwerten, die größer als der Bezugswert sind und die als anomale Werte eingestuft sind, für die Drehmomentstromwerte, die für jeden der mehreren Abschnitte erfasst wurden; und
einen Prozess des Detektierens einer Anomalie des Kraftübertragungsmechanismus auf der Grundlage einer Berechnung eines Differenzwerts zwischen dem Durchschnittswert der normalen Werte und dem Durchschnittswert der anomalen Werte für jeden Abschnitt und des Extrahierens eines Höchstwerts der Differenzwerte für jeden der Abschnitte.

10. Managementverfahren für den Kraftübertragungsmechanismus nach Anspruch 9, das ferner Folgendes umfasst:
einen Prozess des gleichmäßigen Unterteilens des Einheitsprozesses in mehrere Abschnitte.

11. Managementverfahren für den Kraftübertragungsmechanismus nach Anspruch 9, das ferner Folgendes umfasst:
einen Prozess des ungleichmäßigen Unterteilens des Einheitsprozesses in mehrere Abschnitte.

12. Managementverfahren für den Kraftübertragungsmechanismus nach Anspruch 9, das ferner Folgendes umfasst:
einen Prozess des Informierens einer Außenseite über die detektierte Anomalie des Kraftübertragungsmechanismus.

## Revendications

1. Dispositif de gestion pour un mécanisme de transmission de puissance qui transmet une force d'entraînement provenant d'un moteur électrique (13) à un dispositif côté charge,
dans lequel le dispositif de gestion (30) est configuré pour acquérir des valeurs de courant de couple du moteur électrique (13) pour un processus unitaire entraîné par le mécanisme de transmission de puissance, est en outre configuré pour diviser le processus unitaire depuis un point de départ jusqu'à un point d'arrivée en une pluralité de sections prédéterminées, et est en outre configuré pour classifier les valeurs de courant de couple acquises pour chaque section en des valeurs de courant de couple inférieures ou égales à une valeur de référence à titre de valeurs normales et en des valeurs de courant de couple supérieures à la valeur de référence à titre de valeurs anormales,
le dispositif de gestion étant **caractérisé en ce qu'**il est en outre configuré pour obtenir une valeur moyenne de chacune des valeurs de courant de couple qui sont égales ou inférieures à la valeur de référence et une valeur moyenne des valeurs de courant de couple qui sont supérieures à la valeur de référence pour chaque section, et pour détecter une anomalie du mécanisme de transmission de puissance sur la base d'un calcul d'une valeur de différence entre la valeur moyenne des valeurs normales et la valeur moyenne des valeurs anormales pour chaque section et pour extraire une valeur maximum des valeurs de différence desdites sections.

2. Dispositif de gestion pour le mécanisme de transmission de puissance selon la revendication 1,
dans lequel le dispositif de gestion (30) divise de manière égale le processus unitaire en une pluralité de sections.

3. Dispositif de gestion pour le mécanisme de transmission de puissance selon la revendication 1,
dans lequel le dispositif de gestion (30) divise de manière inégale le processus unitaire en une pluralité de sections.

4. Dispositif de gestion pour le mécanisme de transmission de puissance selon la revendication 1,
dans lequel le dispositif de gestion (30) notifie, à l'extérieur, l'anomalie détectée du mécanisme de transmission de puissance.

5. Dispositif de gestion pour le mécanisme de transmission de puissance selon la revendication 1,
dans lequel le mécanisme de transmission de puissance convertit la force d'entraînement du moteur électrique (13) en un mouvement linéaire, et transmet le mouvement linéaire au dispositif côté charge.

6. Dispositif de gestion pour le mécanisme de transmission de puissance selon la revendication 1,
dans lequel le mécanisme de transmission de puissance inclut une vis et un boulon vissé avec la vis.

7. Dispositif de gestion pour le mécanisme de transmission de puissance selon la revendication 1,
dans lequel le mécanisme de transmission de puissance est un mécanisme de vis à bille (20).

8. Dispositif de gestion pour le mécanisme de transmission de puissance selon la revendication 1,
dans lequel le dispositif côté charge est un élément quelconque parmi une machine de moulage par injection (1), un dispositif de presse, et un dispositif de coupe.

9. Procédé de gestion pour un mécanisme de transmission de puissance qui transmet une force d'entraînement provenant d'un moteur électrique (13) à un dispositif côté charge, le procédé de gestion comprenant :
une étape consistant à diviser un processus unitaire depuis un point de départ jusqu'à un point d'arrivée, entraîné par le mécanisme de transmission de puissance, en une pluralité de sections prédéterminées ;
une étape consistant à acquérir des valeurs de courant de couple du moteur électrique (13) pour chacune de la pluralité de sections entraînées par le mécanisme de transmission de puissance ;
le procédé de gestion étant **caractérisé par**
une étape consistant à obtenir une valeur moyenne de valeurs de courant de couple qui sont inférieures ou égales à une valeur de référence et qui sont classifiées à titre de valeurs normales, et une valeur moyenne de valeurs de courant de couple qui sont supérieures à la valeur de référence et qui sont classifiées à titre de valeurs anormales, pour les valeurs de courant de couple acquises pour chacune de la pluralité de sections ; et
une étape consistant à détecter une anomalie du mécanisme de transmission de puissance sur la base d'un calcul d'une valeur de différence entre la valeur moyenne des valeurs normales et la valeur moyenne des valeurs anormales pour chaque section et à extraire une valeur maximum des valeurs de différence pour chacune desdites sections.

10. Procédé de gestion pour le mécanisme de transmission de puissance selon la revendication 9, comprenant en outre :
une étape consistant à diviser de manière égale le processus unitaire en une pluralité de sections.

11. Procédé de gestion pour le mécanisme de transmission de puissance selon la revendication 9, comprenant en outre :
une étape consistant à diviser de manière inégale le processus unitaire en une pluralité de sections.

12. Procédé de gestion pour le mécanisme de transmission de puissance selon la revendication 9, comprenant en outre :
une étape consistant à notifier, à l'extérieur, l'anomalie détectée du mécanisme de transmission de puissance.
